# EUROPEAN PATENT APPLICATION

(11) **EP 4 632 329 A1**
(43) Date of publication of application: **15.10.2025**
(21) Application number: 25170217.1
(22) Date of filing: 11.04.2025
(51) Int. Cl.: G01D 5/12, G01D 3/036

(54) **PROXIMITY ROTATIONAL ANGULAR MEASUREMENT**

(30) Priority: 12.04.2024 US 202418634390
(71) Applicant: RTX Corporation, Farmington, CT 06032 (US)
(72) Inventor: BOUDREAU, Daniel J., Bend, 97701 (US); WARREN, Eli, Bend, 97703-8475 (US); TOMICK, Hunter, Lebanon, 06249 (US)
(74) Representative: Dehns

(57) **Abstract**

A system (100; 300; 500) includes a shaft (305) configured to rotate about an axis (325). The system (100; 300; 500) also includes a target (310) coupled to the shaft (305) and having a radius that varies around a circumference of the target (310). The system (100; 300; 500) further includes a sensor (315) configured to measure a distance between the sensor (315) and an outer surface (330) of the target (310). In addition, the system (100; 300; 500) includes at least one processing device (202) configured to receive at least one distance measurement from the sensor (315) and determine a rotational angular position of the shaft (305) based on the at least one distance measurement and known profile data of the target (310).

## Description

### TECHNICAL FIELD

This disclosure is generally directed to measurement systems and processes. More specifically, this disclosure is directed to systems and methods for proximity rotational angular measurement, such as in a turbine engine.

### BACKGROUND

In many instances, it may be necessary or desirable to know the angular position of a rotating shaft within a jet turbine. In some cases related to blade stress tests, telemetry packages and non-intrusive stress measurement systems (NSMS) are used for measuring and calculating stresses on blades. These tests generally require knowing the angular location of a rotor stack relative to stationary or other rotating hardware. Additionally, there are rig builds where aerodynamic probes are installed onto a rotating shaft, and the angular position of the shaft is needed so that coordinate locations of the probe sensors can be determined as a function of time as the shaft rotates.

### SUMMARY

This disclosure is directed to systems and methods for proximity rotational angular measurement.

In an aspect of the present invention, a system includes a shaft configured to rotate about an axis. The system also includes a target coupled to the shaft and having a radius that varies around a circumference of the target. The system further includes a sensor configured to measure a distance between the sensor and an outer surface of the target. In addition, the system includes at least one processing device configured to receive at least one distance measurement from the sensor and determine a rotational angular position of the shaft based on the at least one distance measurement and known profile data of the target.

In an embodiment of the above, the system comprises a second target coupled to the shaft and having a constant radius around a circumference of the second target and a second sensor configured to measure a distance between the second sensor and an outer surface of the second target. The at least one processing device is further configured to receive multiple distance measurements from the second sensor, determine whether a variance exists in the distance between the second sensor and the outer surface of the second target and adjust a determination of the rotational angular position of the shaft based on any existing variance.

In an embodiment according to any of the previous embodiments, the system further comprises a second sensor positioned at a different angular location around the target. The at least one processing device is configured to determine the rotational angular position of the shaft for different portions of the circumference of the shaft.

In an embodiment according to any of the previous embodiments, the radius of the target gradually increases around an entirety of the circumference of the target.

In an embodiment according to any of the previous embodiments, the radius of the target has a sawtooth pattern that gradually increases and rapidly decreases multiple times around the circumference of the target.

In an embodiment according to any of the previous embodiments, the at least one processing device is further configured to use low-pass frequency filtering to remove noise from the at least one distance measurement from the sensor.

In an embodiment according to any of the previous embodiments, the shaft is part of a turbine engine.

In another aspect of the present invention, a device includes at least one processing device configured to receive at least one distance measurement from a sensor. The at least one distance measurement relates to a distance between the sensor and an outer surface of a target having a radius that varies around a circumference of the target and coupled to a shaft configured to rotate about an axis. The at least one processing device is also configured to determine a rotational angular position of the shaft based on the at least one distance measurement and known profile data of the target.

In an embodiment of the above, the at least one processing device is further configured to receive multiple distance measurements from a second sensor, the second sensor configured to measure a distance between the second sensor and an outer surface of a second target, the second target coupled to the shaft and having a constant radius around a circumference of the second target. The at least one processing device is further configured to determine whether a variance exists in the distance between the second sensor and the outer surface of the second target and adjust a determination of the rotational angular position of the shaft based on any existing variance.

In an embodiment according to any of the previous embodiments, the at least one processing device is further configured to receive multiple distance measurements from a second sensor positioned at a different angular location around the target and determine the rotational angular position of the shaft for different portions of the circumference of the shaft.

In an embodiment according to any of the previous embodiments, the radius of the target gradually increases around an entirety of the circumference of the target.

In an embodiment according to any of the previous embodiments, the radius of the target has a sawtooth pattern that gradually increases and rapidly decreases multiple times around the circumference of the target.

In an embodiment according to any of the previous embodiments, the at least one processing device is further configured to use low-pass frequency filtering to remove noise from the at least one distance measurement from the sensor.

In an embodiment according to any of the previous embodiments, the shaft is part of a turbine engine.

In another aspect of the present invention, a method includes receiving at least one distance measurement from a sensor. The sensor measures a distance between the sensor and an outer surface of a target. The target is coupled to a shaft and has a radius that varies around a circumference of the target, and the shaft is configured to rotate about an axis. The method also includes determining a rotational angular position of the shaft based on the at least one distance measurement and known profile data of the target.

In an embodiment of the above, the method further comprises receiving multiple distance measurements from a second sensor, the second sensor configured to measure a distance between the second sensor and an outer surface of a second target, the second target coupled to the shaft and having a constant radius around a circumference of the second target. The method further comprises determining whether a variance exists in the distance between the second sensor and the outer surface of the second target and adjusting a determination of the rotational angular position of the shaft based on any existing variance.

In an embodiment according to any of the previous embodiments, the method further comprises receiving multiple distance measurements from a second sensor positioned at a different angular location around the target and determining the rotational angular position of the shaft for different portions of the circumference of the shaft.

In an embodiment according to any of the previous embodiments, the radius of the target gradually increases around an entirety of the circumference of the target.

In an embodiment according to any of the previous embodiments, the radius of the target has a sawtooth pattern that gradually increases and rapidly decreases multiple times around the circumference of the target.

In an embodiment according to any of the previous embodiments, the method further comprises using low-pass frequency filtering to remove noise from the at least one distance measurement from the sensor.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates an example system in which proximity rotational angular measurement can be performed according to this disclosure;
FIGURE 2 illustrates an example device for proximity rotational angular measurement according to this disclosure;
FIGURE 3 illustrates an example system for proximity rotational angular measurement according to this disclosure;
FIGURES 4A and 4B illustrate different example profiles of a target according to this disclosure;
FIGURE 5 illustrates another example system for proximity rotational angular measurement according to this disclosure; and
FIGURE 6 illustrates an example method for proximity rotational angular measurement according to this disclosure.

### DETAILED DESCRIPTION

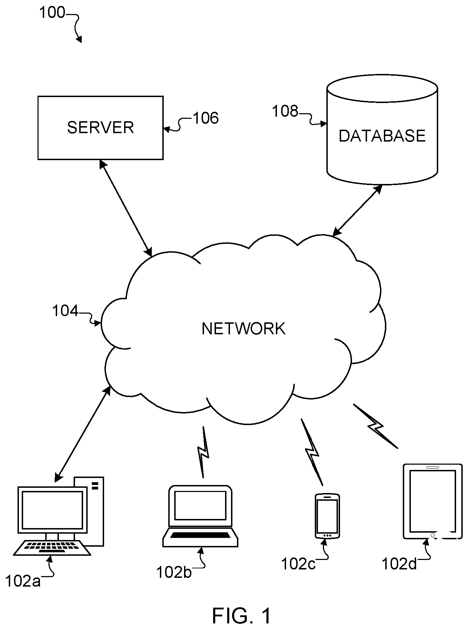

FIGURES 1 through 6, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

For simplicity and clarity, some features and components are not explicitly shown in every figure, including those illustrated in connection with other figures. It will be understood that all features illustrated in the figures may be employed in any of the embodiments described. Omission of a feature or component from a particular figure is for purposes of simplicity and clarity and is not meant to imply that the feature or component cannot be employed in the embodiments described in connection with that figure. It will be understood that embodiments of this disclosure may include any one, more than one, or all of the features described here. Also, embodiments of this disclosure may additionally or alternatively include other features not listed here.

As discussed above, it is often necessary to know the angular position of a rotating shaft within a jet turbine. In some cases related to blade stress tests, telemetry packages and NSMS systems are used for measuring and calculating stresses on blades. These tests require knowing the angular location of the rotor stack relative to the stationary or other rotating hardware. Additionally, there are rig builds where aerodynamic probes are installed onto a rotating shaft, and the angular position of the shaft is needed so that coordinate locations of the probe sensors can be determined as a function of time as the shaft rotates. This is needed for determining hot streaks downstream of the combustor fuel nozzles or other hot streaks related to flame holders. Conventional methods for determining angular position of a shaft are typically based upon 1/rev or multi-tooth sensors and a time of arrival estimate, which result in poor angular fidelity.

This disclosure provides a system and method for proximity rotational angular measurement, which can be implemented for use with an aviation engine. As discussed in greater detail below, the disclosed embodiments use at least one sensor, such as a proximity probe, for measuring the gap between the probe and a rotating target surface of varying radius from the shaft centerline. Using the disclosed embodiments, it is possible to correlate that change in gap to an amount of angular change. Moreover, as described in greater detail below, the disclosed embodiments provide a known global angular position of a rotating system and a known angular change in position of rotating system. The disclosed embodiments enable non-contact measurement with a high level of angular positional accuracy, such as within tenths of a degree.

Note that while this disclosure is described with respect to aviation turbine engines, it will be understood that the principles disclosed here are also applicable to other types of devices or environments. For example, the turbine engine may alternatively be a turbojet turbine engine, a turboprop turbine engine, a turboshaft turbine engine, an auxiliary power unit, an industrial turbine engine for a power plant, or any other type of turbine engine in which determining a rotational angular measurement would be useful.

FIGURE 1 illustrates an example system 100 in which proximity rotational angular measurement can be performed according to this disclosure. As shown in FIGURE 1, the system 100 includes multiple user devices 102a-102d, at least one network 104, at least one server 106, and at least one database 108. Note, however, that other combinations and arrangements of components may also be used here.

In this example, each user device 102a-102d is coupled to or communicates over the network 104. Communications between each user device 102a-102d and a network 104 may occur in any suitable manner, such as via a wired or wireless connection. Each user device 102a-102d represents any suitable device or system used by at least one user to provide information to the server 106 or database 108 or to receive information from the server 106 or database 108. Example types of information may include sensor readings, angular measurements, and the like.

Any suitable number(s) and type(s) of user devices 102a-102d may be used in the system 100. In this particular example, the user device 102a represents a desktop computer, the user device 102b represents a laptop computer, the user device 102c represents a smartphone, and the user device 102d represents a tablet computer. However, any other or additional types of user devices may be used in the system 100. Each user device 102a-102d includes any suitable structure configured to transmit and/or receive information.

The network 104 facilitates communication between various components of the system 100. For example, the network 104 may communicate Internet Protocol (IP) packets, frame relay frames, Asynchronous Transfer Mode (ATM) cells, or other suitable information between network addresses. The network 104 may include one or more local area networks (LANs), metropolitan area networks (MANs), wide area networks (WANs), all or a portion of a global network such as the Internet, or any other communication system or systems at one or more locations. The network 104 may also operate according to any appropriate communication protocol or protocols.

The server 106 is coupled to the network 104 and is coupled to or otherwise communicates with the database 108. The server 106 supports the retrieval of information from the database 108 and the processing of that information. Of course, the database 108 may also be used within the server 106 to store information, in which case the server 106 may store the information itself.

Among other things, the server 106 processes information used in performing proximity rotational angular measurement, such as in a turbine engine. The server 106 includes any suitable structure configured to perform proximity rotational angular measurement. In some embodiments, the server 106 includes one or more processors, one or more memories, and one or more communication interfaces. Note, however, that the server 106 may be implemented in any suitable manner to perform the described functions. Also note that while described as a server here, the device(s) actually implementing the server 106 may represent one or more desktop computers, laptop computers, server computers, or other computing or data processing devices or systems.

The database 108 stores various information used, generated, or collected by the server 106 and the user devices 102a-102d. For example, the database 108 may store sensor readings, angular measurements, and the like.

There are a number of possible ways to implement the system 100 in order to provide the described functionality for performing proximity rotational angular measurement. For example, in some embodiments, the server 106 and database 108 are owned, operated, or managed by a common entity. In other embodiments, the server 106 and database 108 are owned, operated, or managed by different entities. Note, however, that this disclosure is not limited to any particular organizational implementation.

Although FIGURE 1 illustrates one example of a system 100 for proximity rotational angular measurement, various changes may be made to FIGURE 1. For example, the system 100 may include any number of user devices 102a-102d, networks 104, servers 106, and databases 108. Also, while FIGURE 1 illustrates that one database 108 is coupled to the network 104, any number of databases 108 may reside at any location or locations accessible by the server 106, and each database 108 may be coupled directly or indirectly to the server 106. In addition, while FIGURE 1 illustrates one example operational environment in which proximity rotational angular measurement can be performed, this functionality may be used in any other suitable system.

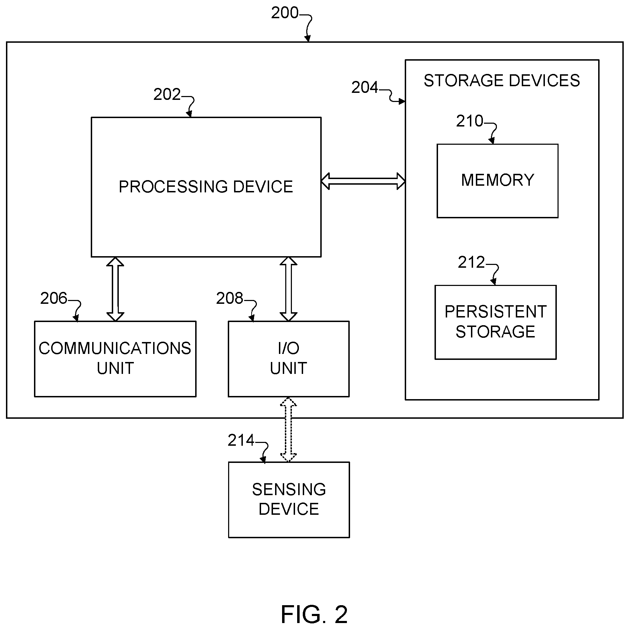

FIGURE 2 illustrates an example device 200 for proximity rotational angular measurement according to this disclosure. One or more instances of the device 200 may, for example, be used to at least partially implement the functionality of the server 106 of FIGURE 1. However, the functionality of the server 106 may be implemented in any other suitable manner. Also, the same or similar arrangement of components may be used to at least partially implement the functionality of one or more of the user devices 102a-102d in FIGURE 1. However, the functionality of each user device 102a-102d may be implemented in any other suitable manner.

As shown in FIGURE 2, the device 200 denotes a computing device or system that includes at least one processing device 202, at least one storage device 204, at least one communications unit 206, and at least one input/output (I/O) unit 208. The processing device 202 may execute instructions that can be loaded into a memory 210. The processing device 202 includes any suitable number(s) and type(s) of processors or other devices in any suitable arrangement. Example types of processing devices 202 include one or more microprocessors, microcontrollers, digital signal processors (DSPs), application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 can include a network interface card or a wireless transceiver facilitating communications over a wired or wireless network, such as the network 104. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also provide a connection for at least one sensing device 214, such as a sensor or camera, that can be used for performing proximity rotational angular measurement, such as described in greater detail below. The I/O unit 208 may also send output to a display, printer, or other suitable output device. Note, however, that the I/O unit 208 may be omitted if the device 200 does not require local I/O, such as when the device 200 can be accessed remotely.

In some embodiments, the instructions executed by the processing device 202 can include instructions that implement the functionality of the server 106 described above. For example, the instructions executed by the processing device 202 can include instructions for performing proximity rotational angular measurement.

Although FIGURE 2 illustrates one example of a device 200 for proximity rotational angular measurement, various changes may be made to FIGURE 2. For example, computing devices and systems come in a wide variety of configurations, and FIGURE 2 does not limit this disclosure to any particular computing device or system.

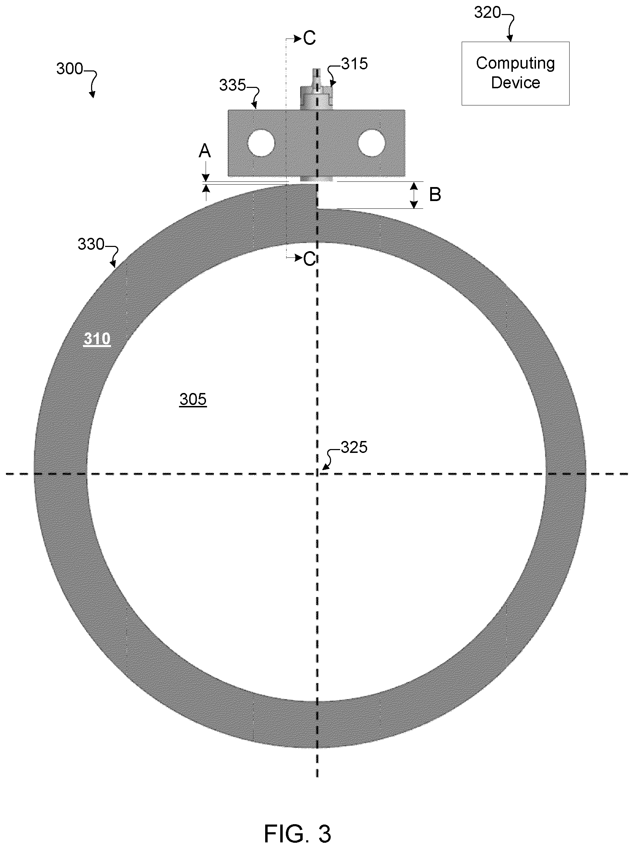

FIGURE 3 illustrates an example system 300 for proximity rotational angular measurement according to this disclosure. As shown in FIGURE 3, the system 300 includes a shaft 305, a target 310, at least one sensor 315, and at least one computing device 320. The view in FIGURE 3 is an axial view showing the shaft 305 and the target 310 in cross-section.

The shaft 305 is a rotating shaft that is configured to rotate about an axis 325. The shaft 305 can be mounted, for example, inside of a turbine engine, and various blades or other features can be mounted around a circumference of the shaft 305 so as to form a rotating assembly that rotates with the shaft 305.

The target 310 is a cam-shaped device disposed on the circumferential outer surface of the shaft 305 and extends radially outward from the shaft 305. The target 310 is fixedly coupled to the shaft 305 such that the target 310 and the shaft 305 rotate together. As shown in FIGURE 3, the target 310 has a radius that varies around the circumference of the target 310. That is, the distance between the outer surface 330 of the target 310 and the axis 325 varies depending on the angular position measured on the circumference. In the example shown in FIGURE 3, the radius of the target 310 increases continuously and smoothly from 0 degrees to 360 degrees, and then abruptly decreases to its smallest radius at 360 degrees. In some embodiments, the target 310 is a discrete component mounted on the circumferential outer surface of the shaft 305. In other embodiments, the target 310 can be manufactured integrally with the shaft 305.

The sensor 315 is disposed in close proximity to the target 310 with a small gap between the sensor 315 and the target 310. In some embodiments, one or more mounting brackets 335 or other mounting structures can be used to mount the sensor 315 in proximity to the target 310. The sensor 315 is a proximity sensor configured to measure a distance between the sensor 315 and the outer surface 330 of the target 310. Depending on the rotational position of the shaft 305 and the target 310 relative to the sensor 315, the distance between the sensor 315 and the outer surface 330 of the target 310 can be at small as the distance indicated at "A" and as large as the distance indicated at "B." The sensor 315 represents any suitable device for measuring the distance to an object. In some embodiments, the sensor 315 is a capacitor based proximity sensor, although other types of sensors are possible and within the scope of this disclosure.

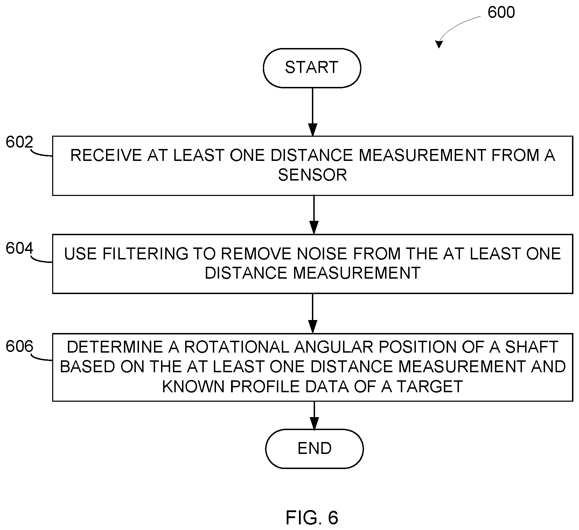

In one aspect of operation, as the shaft 305 and the target 310 rotate, the sensor 315 repeatedly or continuously measures the distance between the sensor 315 and the outer surface 330 of the target 310, and sends the measurements to the computing device 320. The computing device 320 can represent (or be represented by) the computing device 200 of FIGURE 2. The computing device 320 is configured to receive the distance measurements from the sensor 315 and then determine the rotational angular position of the target 310 (and therefore also the rotational angular measurement of the shaft 305) based on the distance measurements and known profile data of the target 310. That is, using the known profile data of the target 310, it is possible to correlate the change in the gap between the sensor 315 and the outer surface 330 of the target 310 to an amount of rotational angular change of the shaft 305. As discussed in greater detail below, the known profile data of the target 310 can be determining empirically ahead of time (such as the time of manufacture) and implemented in the computing device 320 (such as in the form of an algorithm or a look up table derived from the profile data). Further details of the profile data of the target 310 are provided below in conjunction with FIGURE 6. In some embodiments, the computing device 320 can use low pass frequency filtering or other signal conditioning to remove engine vibrations or other noise from the sensor data.

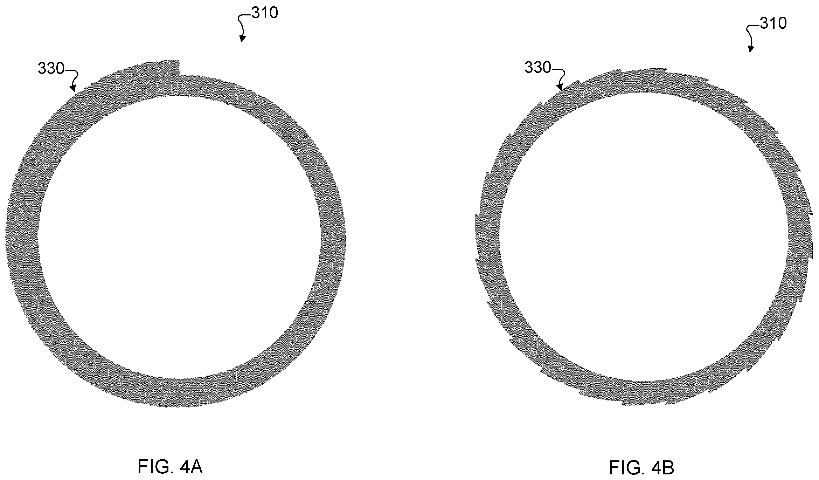

FIGURES 4A and 4B illustrate different example profiles of the target 310 according to this disclosure. As shown in FIGURE 4A, the target 310 can have a radius that gradually increases around an entirety of the circumference of the target 310. This is the same as, or similar to, the example shown in FIGURE 3. Alternatively, as shown in FIGURE 4B, the target 310 can have a radius in a multi-ramp or "sawtooth" pattern that gradually increases and rapidly decreases multiple times around the circumference of the target 310. A multi-ramp design can be used for greater fidelity if a more accurate measurement is needed. This also allows the use of a sensor 315 with a smaller range. This could be useful in implementations with tight spaces that require the use of a sensor 315 with a small form factor. Other profile patterns for the target 310 are possible and within the scope of this disclosure. Generally, the profile of the target 310 and the location of the sensor 315 may take into account the physical space surrounding the shaft 305 and the sensor 315. In many implementations, there are tight spaces around the shaft 305 that do not provide much room for the target 310 and the sensor 315.

In some embodiments, the sensor 315 and the profile of the target 310 can be selected for advantageous operation with each other. Different sensors have different sensing ranges and levels of sensitivity. The sensor 315 can be selected to have a sensing range and level of sensitivity that coordinates well with the profile of the target 310. In some embodiments, the target surface radius change is selected based on the sensor range. For example, it would not be helpful to have a surface radius change of the target 310 that is greater than the range of the sensor 315, or the sensor 315 would not be able to read the full circumference of the target 310.

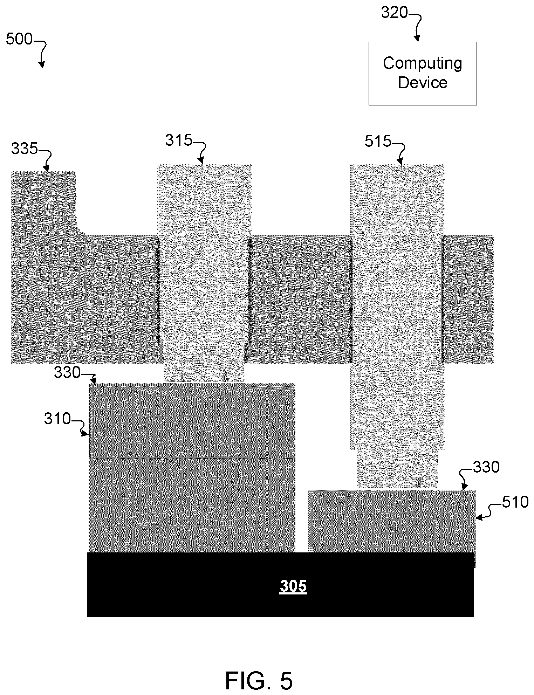

FIGURE 5 illustrates another example system 500 for proximity rotational angular measurement according to this disclosure. The view in FIGURE 5 is turned ninety degrees from the view in FIGURE 3 and can represent a cross-sectional view taken along the line C-C in FIGURE 3. As shown in FIGURE 5, the system 500 includes the shaft 305, the target 310, the sensor 315, and the computing device 320. The system 500 also includes a second target 510 and a second sensor 515.

The second target 510 is disposed on the circumferential outer surface of the shaft 305 and extends radially outward from the shaft 305. The second target 510 is fixedly coupled to the shaft 305 such that the second target 510 and the shaft 305 rotate together. The target 310 and the second target 510 are disposed at different locations along the length of the shaft 305. Unlike the target 310 (which has a varying radius), the second target 510 has a constant radius around the circumference of the second target 510. In some embodiments, the second target 510 can be positioned directly adjacent to the target 310 such that the sides of the target 310 and the second target 510 are in contact with each other. In other embodiments, a gap exists between the target 310 and the second target 510, such as shown in FIGURE 5.

The second sensor 515 is disposed in close proximity to the second target 510 with a small gap between the second sensor 515 and the second target 510. In some embodiments, the mounting bracket 335 can be used to mount the second sensor 515 in proximity to the second target 510. Like the sensor 315, the second sensor 515 is a proximity sensor configured to measure a distance between the second sensor 515 and the outer surface 330 of the second target 510.

Because the second target 510 has a constant radius, the distance between the second sensor 515 and the second target 510 would be a constant value over time in a perfect system. However, real world implementations can exhibit rotating shaft wobble, bow, vibration, or the like during operation, which can result in a changing distance between the second sensor 515 and the second target 510. Additionally or alternatively, as the rotating parts heat up during rapid rotation, thermal growth can cause the distances between the sensors 315 and 515 and their respective targets 310 and 510 to change. If there was only one sensor 315 and one target 310, these changes from wobble, vibration, thermal growth, and the like, could lead to inaccuracy in the determination of the rotational angular position of the shaft. However, with inclusion of the second sensor 515 and the second target 510 in the system 500, any observed changes in the distance between the second sensor 515 and the second target 510 can be considered a variance resulting from wobble, vibration, thermal growth, and the like. The computing device 320 can then adjust its determination of the rotational position of the shaft 305 (as determined from the distance measurements obtained by the sensor 315) based on the variance, such as by subtracting the variance.

In the embodiment shown in FIGURE 5, the sensor 315 and the second sensor 515 are positioned at substantially the same angular position relative to the circumference of the shaft 305. To minimize the effects of sensor error that may occur when the sensor 315 encounters the step change in the outer surface 330 of the target 310, the second sensor 515 could instead be positioned at a different angular position than the sensor 315. For example, the sensor 315 and the second sensor 515 could be spaced 15 degrees apart relative to the circumference of the shaft 305. The different readings from the different sensors 315 and 515 could be used to minimize the effects of sensor error where a profile step change occurs. For example, the determination of the rotational angular position of the shaft 305 can determined by the sensor 315 for a first portion of the circumference of the shaft 305 and then by the second sensor 515 for a second portion of the circumference of the shaft 305.

In some embodiments, more than two sensors 315 can be disposed around the shaft 305 as a way to address data issues that arise with profile step changes. For example, if the profile of the target 310 is a multi-ramp profile, such as shown in FIGURE 4B, multiple sensors 315 can be disposed at various angular positions around the target 310. In some embodiments, the sensors 315 can be staggered relative to the ramps of the target 310, so that each sensor 315 does not encounter a step change at the same time.

In some embodiments, two or more targets 310 and sensors 315 can be implemented at substantially different axial locations along the shaft 305. For example, a first target 310 and first sensor 315 could be disposed at or near one end of the shaft 305, and a second target 310 and second sensor 315 could be disposed at or near the other end of the shaft 305. Differences in measurements between the first sensor 315 and the second sensor 315 could indicate that one end of the shaft 305 is rotated more than the other end of the shaft 305, thus indicating the presence of twist along the shaft 305.

Although FIGURES 3 through 5 illustrate examples of systems for proximity rotational angular measurement and related details, various changes may be made to FIGURES 3 through 5. For example, while the figures show only one shaft 305, actual implementations can include more than one shaft 305 and rotating assembly. Also, while the systems 300 and 500 are shown with fixed sensors 315 and 515 and rotating targets 310 and 510, it is possible to reverse this arrangement such that the targets 310 and 510 are stationary and the sensors 315 and 515 rotate with the shaft 305. In addition, various components shown and described above may be combined, further subdivided, replicated, rearranged, or omitted and additional components may be added according to particular needs.

FIGURE 6 illustrates an example method 600 for proximity rotational angular measurement according to this disclosure. For ease of explanation, the method 600 is described as being performed using the system 300 of FIGURE 3. However, the method 600 could be used with any other suitable device or system.

As shown in FIGURE 6, at least one distance measurement is received from a sensor at step 602. The sensor is configured to measure a distance between the sensor and an outer surface of a target. The target is coupled to a shaft and having a radius that varies around a circumference of the target. The shaft is configured to rotate about an axis. This may include, for example, the computing device 320 receiving at least one distance measurement from the sensor 315. Low pass frequency filtering or other signal conditioning is used at step 604 to remove vibration data or other noise from the at least one distance measurement from the sensor. This may include, for example, the computing device 320 using low pass frequency filtering or other signal conditioning on the at least one distance measurement from the sensor 315. A rotational angular position of the shaft is determined at step 606 based on the at least one distance measurement and known profile data of the target. This may include, for example, the computing device 320 determining the rotational angular position of the shaft 305 based on the at least one distance measurement from the sensor 315 and known profile data of the target 310, such as shown in FIGURE 6.

Although FIGURE 6 illustrates one example of a method 600 for proximity rotational angular measurement, various changes may be made to FIGURE 6. For example, while shown as a series of steps, various steps shown in FIGURE 6 could overlap, occur in parallel, occur in a different order, or occur multiple times. Moreover, some steps could be combined or removed and additional steps could be added according to particular needs.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A system (100; 300; 500) comprising:
a shaft (305) configured to rotate about an axis (325);
a target (310) coupled to the shaft (305) and having a radius that varies around a circumference of the target (310);
a sensor (315) configured to measure a distance between the sensor (315) and an outer surface (330) of the target (310); and
at least one processing device (202) configured to:
receive at least one distance measurement from the sensor (315); and
determine a rotational angular position of the shaft (305) based on the at least one distance measurement and known profile data of the target (310).

2. The system (100; 300; 500) of claim 1, further comprising:
a second target (310; 510) coupled to the shaft (305) and having a constant radius around a circumference of the second target (310; 510); and
a second sensor (315; 515) configured to measure a distance between the second sensor (315; 515) and an outer surface (330) of the second target (310; 510);
wherein the at least one processing device (202) is further configured to:
receive multiple distance measurements from the second sensor (315; 515);
determine whether a variance exists in the distance between the second sensor (315; 515) and the outer surface (330) of the second target (310; 510); and
adjust a determination of the rotational angular position of the shaft (305) based on any existing variance.

3. The system (100; 300; 500) of claim 1, further comprising:
a second sensor (315; 515) positioned at a different angular location around the target (310), wherein the at least one processing device (202) is configured to determine the rotational angular position of the shaft (305) for different portions of the circumference of the shaft (305).

4. A device (200; 320) comprising:
at least one processing device (202) configured to:
receive at least one distance measurement from a sensor (315), the at least one distance measurement relating to a distance between the sensor (315) and an outer surface (330) of a target (310) having a radius that varies around a circumference of the target (310) and coupled to a shaft (305) configured to rotate about an axis (325); and
determine a rotational angular position of the shaft (305) based on the at least one distance measurement and known profile data of the target (310).

5. The device (200; 320) of claim 4, wherein the at least one processing device (202) is further configured to:
receive multiple distance measurements from a second sensor (315; 515), the second sensor (315; 515) configured to measure a distance between the second sensor (315; 515) and an outer surface (330) of a second target (310; 510), the second target (310; 510) coupled to the shaft (305) and having a constant radius around a circumference of the second target (310; 510);
determine whether a variance exists in the distance between the second sensor (515; 315) and the outer surface (330) of the second target (310; 510); and
adjust a determination of the rotational angular position of the shaft (305) based on any existing variance.

6. The device (200; 320) of claim 4, wherein the at least one processing device (202) is further configured to:
receive multiple distance measurements from a second sensor (315; 515) positioned at a different angular location around the target (310),
determine the rotational angular position of the shaft (305) for different portions of the circumference of the shaft (305).

7. The system (100; 300; 500) or device (200; 320) of any preceding claim, wherein the radius of the target (310) gradually increases around an entirety of the circumference of the target (310).

8. The device (200; 320) or system (100; 300; 500) of any of claims 1 to 6, wherein the radius of the target (310) has a sawtooth pattern that gradually increases and rapidly decreases multiple times around the circumference of the target (310).

9. The device (200; 320) or system (100; 300; 500) of any preceding claim, wherein the at least one processing device (202) is further configured to use low-pass frequency filtering to remove noise from the at least one distance measurement from the sensor (315).

10. The device (200; 320) or system (100; 300; 500) of any preceding claim, wherein the shaft (305) is part of a turbine engine.

11. A method comprising:
receiving at least one distance measurement from a sensor (315), the sensor (315) configured to measure a distance between the sensor (315) and an outer surface (330) of a target (310), the target (310) coupled to a shaft (305) and having a radius that varies around a circumference of the target (310), the shaft (305) configured to rotate about an axis (325); and
determining a rotational angular position of the shaft (305) based on the at least one distance measurement and known profile data of the target (310).

12. The method of claim 11, further comprising:
receiving multiple distance measurements from a second sensor (315; 515), the second sensor (315; 515) configured to measure a distance between the second sensor (315; 515) and an outer surface (330) of a second target (310; 510), the second target (310; 510) coupled to the shaft (305) and having a constant radius around a circumference of the second target (310; 510);
determining whether a variance exists in the distance between the second sensor (315; 515) and the outer surface (330) of the second target (310; 510); and
adjusting a determination of the rotational angular position of the shaft (305) based on any existing variance.

13. The method of claim 11, further comprising:
receiving multiple distance measurements from a second sensor (315; 515) positioned at a different angular location around the target (310),
determining the rotational angular position of the shaft (305) for different portions of the circumference of the shaft (305).

14. The method of any of claims 11 to 13, wherein:
the radius of the target (310) gradually increases around an entirety of the circumference of the target (310); or
the radius of the target (310) has a sawtooth pattern that gradually increases and rapidly decreases multiple times around the circumference of the target (310).

15. The method of any of claims 11 to 14, further comprising:
using low-pass frequency filtering to remove noise from the at least one distance measurement from the sensor (315).
